# EUROPÄISCHE PATENTANMELDUNG

(11) **EP 1 139 067 A2**
(43) Veröffentlichungstag der Anmeldung: **04.10.2001**
(21) Anmeldenummer: 01102288.6
(22) Anmeldetag: 01.02.2001
(51) Int. Cl.: G01C 21/34

(54) **Navigationsgerät und Verfahren zur Tourenberechnung**

(30) Priorität: 28.03.2000 DE 10015314
(71) Anmelder: ROBERT BOSCH GMBH, 70442 Stuttgart (DE)
(72) Erfinder: Lau, Stefan, 31180 Giesen (DE); Jung, Thomas, 60314 Frankfurt (DE); Schmidt, Heinrich, 31199 Diekholzen (DE); Hoffmann, Ralf, 31137 Hildesheim (DE)

(57) **Zusammenfassung**

Es wird ein Navigationsgerät bzw. ein Verfahren zur Routenberechnung zur Anfahrt von Zielen vorgeschlagen, die dazu dienen, anhand von allgemeinen Eingaben eine Tour zur Anfahrt von Zielen ausgehend von einem aktuellen Standort zu berechnen. Insbesondere ein Rundkurs kann dabei berechnet werden. Nähert sich das erfindungsgemäße Navigationsgerät einem Ziel, wird ab einem vorgegebenen Abstand von dem Ziel, automatisch die Ausgabe von Hinweisen über das Ziel aus dem Speicher vorgenommen. Während einer Fahrt sind automatische Anpassungen der Tour möglich. Manuell kann die Ausgabe von Zusatzinformationen zu Zielen vorgenommen werden. Zusatzinformationen und Tourenberechnung werden entweder aus dem Speicher bzw. vom Prozessor vorgenommen, oder es ist möglich, Zusatzinformationen und Tourenberechnungen von einem Zentralrechner vornehmen zu lassen. Fahrhinweise und Hinweise über die Ziele werden mit unterschiedlichen künstlichen Stimmen vorgenommen.

## Beschreibung

### Stand der Technik

Die Erfindung betrifft ein Navigationsgerät bzw. ein Verfahren zur Tourenberechnung zur Anfahrt von Zielen nach der Gattung der unabhängigen Patentansprüche.

Es ist bereits der Merian-Scout-Reiseführer als CD-ROM verfügbar, der eine digitale Karte liefert, der Restaurants in bestimmten Städten angibt und der eine Vorschlagsliste für Reiseziele generiert. Dann kann eine Zielauswahl getroffen werden und mittels eines Navigationsgeräts eine Route berechnet und angezeigt werden.

### Vorteile der Erfindung

Das erfindungsgemäße Navigationsgerät bzw. das erfindungsgemäße Verfahren zur Tourenberechnung zur Anfahrt von Zielen mit den Merkmalen der unabhängigen Patentansprüche hat demgegenüber den Vorteil, dass eine Fremdenführerfunktion des Navigationsgeräts verfügbar ist, wobei Tourenlänge, Reisedauer und Zahl sowie Art der Ziele als Eingabeparameter eingegeben werden können. Zur Tourenlänge gehört insbesondere auch die geplante Verweildauer bei den einzelnen Zielen. Dadurch ist die Tourengestaltung von den Eingaben und damit den Wünschen der Benutzer abhängig. Insbesondere ist dadurch die individuelle Planung einer Reise möglich, wobei Daten über Ziele benutzt werden, um eine gezielte und optimale Reiseplanung zu erstellen. Die Ziele sind hier im Allgemeinen Sehenswürdigkeiten aller Art und werden im folgenden mit dem englischem Begriff Points of Interest (POI) bezeichnet.

Vorteilhafterweise ist es dabei dann auch möglich, dass ohne Angaben zur Tourenlänge, zur Reisedauer und zur Zahl und/oder Art der POI Reiserouten angegeben werden, die vom aktuellen Standort aus abgefahren werden können. Dadurch ist es möglich, dass Nutzer sich anhand von verschiedenen Vorschlägen Gedanken über die Tourenplanung machen können. Dies ist eine hilfreiche und auf Daten beruhende Hilfestellung.

Durch die in den abhängigen Ansprüchen aufgeführten Maßnahmen und Weiterbildungen sind vorteilhafte Verbesserungen des in den unabhängigen Patentansprüchen angegebenen Navigationsgeräts bzw. Verfahrens zur Routenberechnung zur Anfahrt von Zielen möglich.

Besonders von Vorteil ist, dass mittels des erfindungsgemäßen Navigationsgeräts bzw. des erfindungsgemäßen Verfahrens zur Tourenberechnung zur Anfahrt von POI ein Rundkurs berechnet werden kann, um die POI anzufahren. Dies ermögliche bspw. von einem Quartier aus eine oder mehrere Tagesfahrten optimal zu planen, um damit die Reisezeit effektiv für den Besuch von POI zu nutzen.

Weiterhin ist es von Vorteil, dass das Navigationsgerät mittels der Ortungsvorrichtung erkennt, dass sich das Navigationsgerät einem POI nähert und ab einer bestimmten Entfernung Hinweise aus dem Speicher lädt und akustisch und/oder optisch darstellt. Dies kann auch durch das Erreichen von bestimmten Orten, die sich in der Nähe des anzufahrenden POI befinden, erkannt werden. Ab diesen bestimmten Orten werden dann die Informationen ausgegeben. Diese Orte werden als Points of Announcements (POA) bezeichnet. Damit wird ein künstlicher Fremdenführer für die Nutzer des Navigationsgeräts erzeugt. Ein Abruf durch die Betätigung von Bedienelementen oder Eingabevorrichtungen ist damit nicht mehr notwendig.

Darüber hinaus ist es von Vorteil, dass während der Fahrt die Tour anhand von neuen Eingaben angepaßt wird, um so neuen Gegebenheiten Rechnung zu tragen. Damit wird eine flexible Tourenplanung, die anhand verschiedener Umstände notwendig sein kann, ermöglicht. Zu solchen Umständen gehört z. B. Wetter oder ein plötzliches neues Interesse an einem POI.

Es ist weiterhin von Vorteil, dass das Navigationsgerät so ausgebildet ist, dass mittels Eingaben Zusatzinformationen aus dem Speicher geladen werden, um dann mittels der Anzeige und/oder dem Lautsprecher dargestellt zu werden. Damit wird es einem Benutzer ermöglicht, je nach seiner Interessenlage Zusatzinformationen zu bestimmten POI abzurufen.

Darüber hinaus ist es von Vorteil, dass berechnete Touren im Speicher bevorratet werden oder mittels Kommunikationsmitteln von anderen Datenquellen abgerufen werden. Damit ist eine Vorausberechnung von Touren möglich, die dann in den Speicher geladen werden. Auch eine Zusatzinformation kann vorteilhafterweise mittels der Kommunikationsmittel von entfernten Datenquellen abgerufen werden. Damit steht dem Navigationsgerät eine sehr große Menge von Daten zur Verfügung, da nicht alle diese Daten auf dem lokalen Speicher bevorratet werden müssen.

Schließlich ist es von Vorteil, dass das Navigationsgerät Fahrhinweise mit einer ersten charakteristischen Stimme akustisch wiedergibt und Informationen über POI mit einer zweiten, von der ersten unterscheidbaren, Stimme wiedergibt. Damit wird eine quasi Personalisierung des künstlichen Fremdenführers erreicht, da er sich deutlich von der Stimme, die die Fahrhinweise wiedergibt, unterscheidet. Dies erhöht die Akzeptanz bei der Nutzung des erfindungsgemäßen Navigationsgeräts, da Personen immer eine individuelle Kommunikation bevorzugen werden.

### Zeichnung

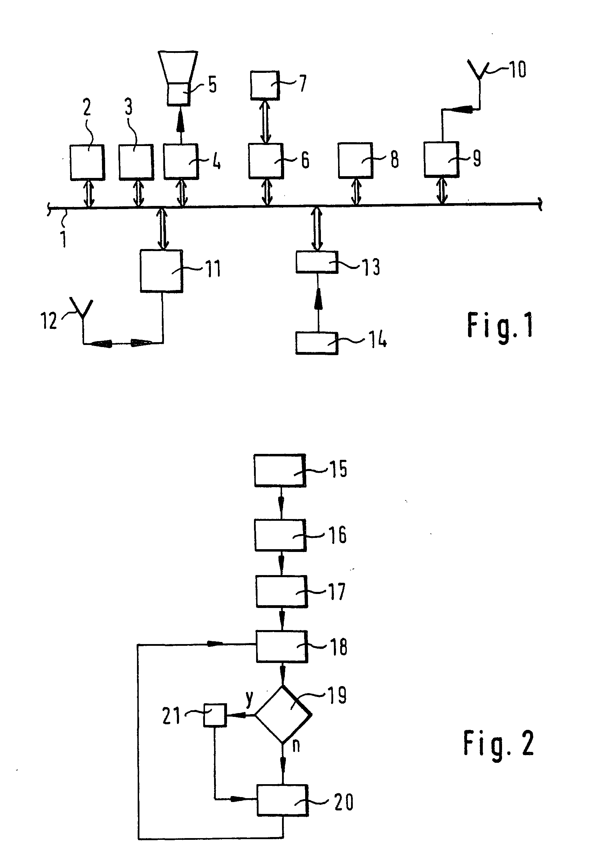

Ausführungsbeispiele der Erfindung sind in der Zeichnung dargestellt und in der nachfolgenden Beschreibung näher erläutert. Es zeigen Figur 1 das erfindungsgemäße Navigationsgerät und Figur 2 das erfindungsgemäße Verfahren zur Routenberechnung zur Anfahrt von POIs.

### Beschreibung

Der Begriff Tour bezeichnet eine Reise, die unter Umständen zur Anfahrt von mehreren Zielen genutzt wird und bei der eine Verweildauer wie Pausen mit berücksichtigt werden. Dagegen gibt eine Route eine Start-Ziel-Beziehung an. Die Ziele werden im folgenden mit Points of Interest (POI) bezeichnet. Sie umfassen Sehenswürdigkeiten, zu denen Gebäude, Plätze, Museen, Landschaften und Tiergehege gehören. POI sind jedoch auch Veranstaltungsorte, Parkplätze, Restaurants, Supermärkte oder Tankstellen.

Um an einem Ort sich die vorhandenen POI anzusehen, ist die Kenntnis des Straßennetzes, der örtlichen Gegebenheiten und das Wissen um die vorhandenen POI notwendig. Diese Aufgaben selbst zu erledigen, wird sehr aufwendig und zeitintensiv sein. Es stellt sich daher die Aufgabe, ein System zu schaffen, das eine Person bei einer Anfahrt von POI optimal unterstützt, ohne dass die Person vorher selbst Informationen sammeln muß.

Erfindungsgemäß wird daher ein Navigationsgerät realisiert, das die Anfahrt von POI unterstützt, wobei Angaben bezüglich der Reisezeit, der Reiselänge und der Zahl und/oder Art der POI berücksichtigt werden. Es ist dabei insbesondere möglich, von einem bestimmten Standort aus einen Rundkurs zu berechnen, der zu einer optimalen Anfahrt von POI führt. Durch eine vorhandene Ortungsvorrichtung wird bei Annäherung an einen POI automatisch eine Ausgabe von Zusatzinformationen zu diesem POI ausgegeben. Auch während einer Fahrt ist die Anpassung nach neuen Eingaben der Tour durch eine Nachberechnung möglich. Durch Eingaben sind Zusatzinformationen zu POI abrufbar. Touren können bereits vorher berechnet werden, um dann entweder von dem lokalen Speicher oder mittels Kommunikationsmitteln von einer externen Datenquelle geladen zu werden. Auch Zusatzinformationen sind von externen Datenquellen mittels der Kommunikationsmittel abrufbar.

In Figur 1 ist das erfindungsgemäße Navigationsgerät als Blockschaltbild dargestellt. Über einen Bus 1 sind die dargestellten Komponenten des Navigationsgeräts miteinander verbunden. Der Bus 1 ist hier als elektrisches Leitungssystem ausgeführt, er kann aber auch alternativ als optisches Leitungssystem oder als Funkbus ausgeführt sein. Bei einem optischem Bus weisen die an diesem Bus angeschlossenen Komponenten Optokoppler auf, um Daten auf den Bus 1 zu übertragen oder von dem Bus 1 zu empfangen. Bei einem Funkbus weisen alle an dem Funkbus angeschlossenen Stationen Sendeempfangsstationen auf, um die Kommunikation über den Funkbus zu gewährleisten.

Alle an den Bus 1 angeschlossenen Komponenten weisen Buscontroller auf, um eine Kommunikation über den Bus 1 zu gewährleisten. An den Bus 1 sind über Datenein-/-ausgänge ein Prozessor 2, ein Speicher 3, Signalverarbeitungen 4, 6 und 13, eine Ortungsvorrichtung 8, eine Empfangsstation 9 und eine Sendeempfangsstation 11 angeschlossen. An einen Datenausgang der Signalverarbeitung 4 ist ein Lautsprecher 5 angeschlossen. Mit einem zweiten Datenein-/-ausgang der Signalverarbeitung 6 ist eine Anzeige 7 verbunden. An einen Dateneingang der Empfangsvorrichtung 9 ist eine Antenne 10 angeschlossen. An einen zweiten Datenein-/-ausgang der Sendeempfangsstation 11 ist eine Antenne 12 angeschlossen. An einen Dateneingang der Signalverarbeitung 13 ist eine Eingabevorrichtung 14 angeschlossen.

Der Prozessor 2 ist hier ein Mikroprozessor, auf dem die Steuerung der Software des Navigationsgeräts abläuft. Alternativ ist ein Mikrocontroller oder ein digitaler Signalprozessor möglich. Der Speicher 3 repräsentiert hier den lokalen wiederbeschreibbaren Speicher, um Daten zwischenzuspeichern. Aber auch nicht wiederbeschreibbare Speicher wie eine CD-ROM oder eine DVD mit einem entsprechenden Laufwerk werden durch die Speicher 3 repräsentiert.

Der Lautsprecher 5 erhält die Signale, die akustisch wiederzugegeben sind, von der Signalverarbeitung 4, die dafür einen Audioverstärker aufweist. Hier ist stellvertretend ein Lautsprecher dargestellt. Es kann sich jedoch um ein Lautsprechersystem mit mehreren Lautsprechern handeln.

Die Anzeige 7 erhält von der Signalverarbeitung 6 Signale, die auf der Anzeige 7 dargestellt werden sollen. Die Anzeige 7 ist hier als Monitor und zwar als TFT (Thin Film Transistor) - Monitor ausgeführt. Alternativ ist ein stereoskopischer Bildschirm, ein Windschutzscheibendisplay oder Netzhautprojektion möglich. Die Anzeige 7 kann auch als Eingabevorrichtung verwendet werden, insofern entweder eine berührungssensitive Schicht auf der Oberfläche der Anzeige 7 vorliegt oder eine Blickerkennung verfügbar ist, die zu einer Auswahl von Daten verwendet wird.

Die Ortungsvorrichtung 8 ist hier als GPS (Global Positioning System) - Empfänger ausgeführt, der den aktuellen Standort des Navigationsgeräts ermittelt. Alternativ ist es möglich, mittels eines Mobiltelefons den aktuellen Standort des Navigationsgeräts abzuschätzen. Eine weitere Möglichkeit, die Ortungsvorrichtung zu realisieren, besteht darin, eine autonome Navigation auf Basis einer digitalen Karte zu verwenden. Dazu sind dann zusätzlich ein Drehratensensor und ein Tachosignalgeber notwendig, um ausgehend von einem eingegebenen Startpunkt die relative Bewegung und damit den aktuellen Standort zu ermitteln.

Die Empfangsstation 9 ist hier ein Autoradio mit der zugehörigen Antenne 10. Das Autoradio 9 wird mittels Eingaben durch die Eingabevorrichtung 14 gesteuert. Die Empfangsvorrichtung 9 ist hier als DAB (Digital Audio Broadcasting) - Empfänger ausgebildet. DAB ist ein digitales Übertragungsverfahren das mittels orthogonalem Frequenzmultiplex durchgeführt wird und aufgrund seiner Rahmenstruktur die Übertragung von Multimediadaten erlaubt. Werden Multimediadaten übertragen und verarbeitet, dann wird dies DMB (Digital Multimedia Broadcasting) genannt. Da 1,7 Mbit/s Übertragungsbandbreite bei DAB zur Verfügung stehen, ist die Übertragung von umfangreichen Daten, wie sie z. B. für Internetanwendungen notwendig sind, kein Problem. Solche Multimediadaten betreffen hier insbesondere Zusatzinformationen zu POI. Diese Daten werden dann über den Bus 1 zu dem Speicher 3 übertragen, um dort zwischengespeichert zu werden. Der Prozessor 2 entnimmt dann die Daten dem Speicher 3, um sie mittels des Lautsprechers 5 und/oder der Anzeige 7 darzustellen.

Neben DAB sind auch DVB (Digital Video Broadcasting) und DRM (Digital Radio Mondial) geeignet, um Multimediadaten zu übertragen. Sie unterscheiden sich von DAB hinsichtlich der Rahmenstruktur und der Übertragungsbandbreite sowie der Sendefrequenzen.

Mittels der Sende-/Empfangsstation 11 und der Antenne 12 wird ein Mobiltelefon dargestellt. Mittels des Mobiltelefons 11 ist es möglich, gezielt Daten von bestimmten Datenquellen abzurufen, wobei dann diese Datenquellen über das Telefonnetz anwählbar sind. Die Sende-/Empfangsstation 11 und die Antenne 12 können auch als Rückkanal für die DAB-Datenübertragung dienen. Mittels des Rückkanals werden dabei Daten angegeben, die dann mittels DAB übertragen werden. Es ist dabei auch möglich, dass über den Mobilfunkkanal Entschlüsselungsdaten übertragen werden, mit denen dann verschlüsselte DAB-Daten entschlüsselt werden können. Als Mobilfunkübertragungssysteme sind GSM (Global System for Mobile Communication), UMTS (Universal Mobile Telecommunication System) und andere Mobilfunkstandards, auch solche, die mittels Satellitenübertragung funktionieren, möglich.

Die Sende-/Empfangsstation 11 und die Antenne 12 können alternativ auch eine Schnittstelle innerhalb des Fahrzeugs repräsentieren. Diese Schnittstelle ist dann für den Nahempfang geeignet, so z. B. von der Übertragung von Daten von einem tragbaren Rechner zu dem erfindungsgemäßen Navigationsgerät. Diese Schnittstelle ist dann entweder als Funkschnittstelle oder als Infrarotschnittstelle ausgebildet. Die Schnittstelle kann zusätzlich zu einem Mobiltelefon oder einer anderen Funkübertragung vorliegen. Aufgrund der Schnittstelle können dann insbesondere bereits an einem Heimrechner ausgewählte Touren zu dem Navigationsgerät überspielt werden, um dann von dem Navigationsgerät zur Erzeugung von Fahrhinweisen und zur Darstellung der Tour verwendet zu werden. Der Heimrechner kann dabei ein tragbarer Computer sein.

Die Eingabevorrichtung 14, die Daten an die Signalverarbeitung 13 liefert, die diese für die Übertragung über den Bus 1 aufbereitet, steht hier stellvertretend für manuelle Bedienelemente, aber auch für ein Mikrofon, um eine Sprachsteuerung zu ermöglichen. Soll eine Sprachsteuerung aktiviert werden, so hat die betreffende Person ein manuelles Bedienelement zu betätigen, um die Sprachsteuerung zu aktivieren. Wird dann ein Befehl ausgesprochen, der nicht von der Sprachsteuerung erkannt wird, wird eine Fehlermeldung entweder mittels des Lautsprechers 5 oder der Anzeige 7 ausgegeben.

Um nun von einem aktuellen Standort eine Tour zur Anfahrt von POI sich ausgeben zu lassen, wird eine Person mittels der Eingabevorrichtung 14 einen entsprechenden Menüpunkt auf der Anzeige 7 auswählen, um die Berechnung von Touren zur Anfahrt von POI einzuleiten. Auswahlmenüs, wie sie von der Computerwelt bekannt sind, können verschiedenartig ausgeprägt sein. Hier wird mit einer Wippe als Bedienelement ein Menüpunkt aus den auf der Anzeige 7 dargestellten Menüpunkten ausgewählt. Alternativ ist es möglich, dass mittels Bedienelementen, die einer Computermaus ähneln, ein Programm als Menüpunkt aktiviert wird, wobei dann eine grafische Benutzeroberfläche auf der Anzeige 7 dargestellt wird. Solche Bedienelemente sind zum Beispiel Rädchen, die im Lenkrad platziert sind.

Die Person, die sich Touren berechnen lassen möchte, wird dann Angaben bezüglich der Tourenlänge, der Reisedauer und dabei der geplanten Verweildauer an den anzufahrenden POI, der Zahl und/oder Art der POI eingeben. Daraus berechnet dann der Prozessor 2 mittels Daten, die im Speicher 3 abgelegt sind, eine Tour zur Anfahrt der POI. Die Tour kann entweder automatisch oder durch Eingabe des Nutzers insoweit optimiert werden, dass die Tour nach touristischen Gesichtspunkten optimiert wird. D. h. die Tour orientiert sich daran, durch welchen Gegenden und Orten sie führt. Dabei können Landschaften und Orte mit unterschiedlichen Punkten bewertet werden, um unter vorgegebenen Parametern wie die Reisezeit eine optimale Tourenberechnung zu ermöglichen. Das erfindungsgemäße Navigationsgerät liefert dann auch zu solchen Landschaften und Orten automatisch Hinweise, sobald sich das Navigationsgerät den Landschaften und Orten nähert. Diese Landschaften und Orte, die als Points of Scenic Routing bezeichnet werden, sind auf der digitalen Karte nicht explizit als anzufahrende POI dargestellt.

Solche Touren sind auf dem Speicher 3 unter wählbaren Namen abspeicherbar, um sie später gegebenenfalls wieder zu laden, damit kann die Planung für mehreren Touren auf einmal durchgeführt werden, um später, am jeweiligen Reisetag, die Tour zu laden. Die berechnete und ausgewählte Route wird dann auf der Anzeige 7 auf einer digitalen Karte ausgegeben. Alternativ ist es hier möglich, dass der Prozessor 2 mittels der Sendeempfangsstation 11 einen zentralen Rechner kontaktiert, der die Berechnung der Reiseroute durchführt, um dann entweder mittels der Antenne 10 und der Empfangsstation 9 oder der Antenne 12 und der Sendeempfangsstation 11 die Antwort bzgl. der Tour zu erhalten, die dann mittels der Anzeige 7 ebenso dargestellt wird.

In Abhängigkeit von dem Standort, den die Ortungsvorrichtung 8 anzeigt, werden Fahrhinweise optisch mittels der Anzeige 7 z. B. in Form von Pfeilen und/oder akustisch mittels des Lautsprechers 5 ausgegeben. Gibt die Person keine Angaben zur Tourenlänge, der Reisedauer und Zahl und/oder Art der POI an, werden mehrere Touren, die für den aktuellen Standort in Frage kommen, angezeigt. Diese Touren können z. B. einen Umkreis von 50 oder 100 km um den aktuellen Standort abdecken. Dies kann der Nutzer durch entsprechende Vorgaben, die einzugeben sind, bestimmen. Durch Eingaben mittels der Eingabevorrichtung 14 kann dann der Nutzer eine für ihn geeignete Tour auswählen. Dabei kann insbesondere angegeben sein, dass die vorgeschlagene Tour ein Rundkurs ist. Damit ist es möglich, wieder an den aktuellen Standort zurückzukehren.

Wird mittels der Ortungsvorrichtung 8 festgestellt, dass sich das Navigationsgerät einem POI nähert, dann wird in einer vorgegebenen Entfernung von dem POI automatisch die Anzeige und Wiedergabe von Hinweisen aus dem Speicher initiiert, um Informationen über den POI zu liefern. Damit wird dann eine Fremdenführerfunktion realisiert, wie man sie von organisierten Reisen kennt. Alternativ ist es hier möglich, nach dem Erreichen von bestimmten Orten in der Nähe des anzufahrenden POI mit der Ausgabe der Informationen über den POI zu beginnen. Diese Orte werden in der digitalen Karte mit Points of Announcements bezeichnet. Die Informationen können hierbei in zwei Ebenen eingeteilt werden, in kürzere Berichte, die automatisch ausgegeben werden, und in detailliertere Informationen, die auf eine Eingabe des Nutzers ausgegeben werden.

Ist es notwendig während einer Fahrt in einem Fahrzeug, in dem sich das Navigationsgerät befindet, nach Auswahl der Tour diese in Abhängigkeit von neuen Eingaben zu ändern, dann berechnet der Prozessor 2 in Abhängigkeit von diesen neuen Eingaben eine neue Tour von dem aktuellen Standort aus, wobei die Tour dann mittels der Anzeige 7 dargestellt wird. Die Fahrhinweise, die mittels des Lautsprechers 5 und der Anzeige 7 ausgegeben werden, werden dann entsprechend angepaßt.

Mittels zusätzlicher Eingaben durch die Eingabevorrichtung 14 ist es möglich, für solche POI Zusatzinformationen abzurufen, die in dem Speicher 3 abgelegt sind. Die Zusatzinformationen werden dann mittels der Anzeige 7 und/oder dem Lautsprecher 5 wiedergegeben. Weiterhin können solche Zusatzinformationen mittels der Kommunikationsmittel, nämlich der Empfangsstation 9 und/oder der Sendeempfangsstation 11, abgerufen werden.

Als solche Zusatzinformationen können Öffnungszeiten, Ticketbuchungen, Hotels, Mietwagen usw. ausgegeben werden und mit Kommunikationsmitteln verknüpft werden, um gegbenenfalls eine Bestellung oder Buchung beispielsweise über das Internet vorzunehmen.

In Figur 2 ist das erfindungsgemäße Verfahren zur Tourenberechnung zur Anfahrt von POI dargestellt. In Verfahrensschritt 15 beginnt das Verfahren. In Verfahrensschritt 16 werden mittels der Eingabevorrichtung 14 Eingaben bzgl. der Tourenlänge, der Reisedauer, der Zahl und/oder Art der POI gemacht, um Auswahlparameter für die Berechnung einer Anfahrt zu den POI vorzunehmen. Dabei kann auch angegeben sein, ob es sich um einen Rundkurs handelt oder nicht.

In Verfahrensschritt 17 wird anhand dieser Eingaben durch den Prozessor 2 mittels Daten von dem Speicher 3 die Berechnung der Tour durchgeführt. Diese Berechnung kann auch von einem zentralen Rechner extern durchgeführt werden, wobei dann die Eingabeparameter mittels der Sendeempfangsstation 11 und der Antenne 12 zu dem Zentralrechner übertragen werden, der dann die Berechnung durchführt. Das Ergebnis wird dann entweder von der Sendeempfangsstation 11 und der Antenne 12 oder der Sendeempfangsstation 9 und der Antenne 10 empfangen, um dann im Speicher 3 zwischengespeichert zu werden.

In Verfahrensschritt 18 wird dann die berechnete Tour auf der Anzeige 7 als digitale Karte dargestellt. Mittels des Lautsprechers 5 und/oder der Anzeige 7 werden während der Fahrt Hinweise bzgl. dieser berechneten Tour angegeben, wobei die Hinweise in Abhängigkeit von dem aktuellen Standort, der mittels der Ortungsvorrichtung 8 ermittelt wird, angegeben werden.

In Verfahrensschritt 19 wird überprüft, ob weitere Eingaben bzgl. Tourenlänge, Reisedauer, Zahl und/oder Art der POI gemacht werden oder ob ein bestimmtes Ziel eingegeben wird. Ist das nicht der Fall, dann wird zu Verfahrensschritt 20 gesprungen. Ist es jedoch der Fall, dann wird in Verfahrensschritt 21 entweder eine neue Tour berechnet und dargestellt oder, falls die Ausgabe von Zusatzinformationen gewünscht wird, es werden diese Zusatzinformationen ausgegeben. Diese Zusatzinformationen werden mittels der Anzeige 7 und/oder dem Lautsprecher 5 ausgegeben. Dabei kann es sich um Multimediadaten handeln, also um Videobilder, Graphiken, Text oder Audioinformationen. Fahrhinweise, also Angaben in welche Richtung man sich zu bewegen hat, werden hier mittels einer anderen Stimme wiedergegeben als die Informationen bzgl. der Sehenswürdigkeiten. Beispielsweise ist es dabei möglich, mittels einer künstlichen männlichen Stimme die Fremdenführerfunktion auszuführen, während mit einer künstlichen weiblichen Stimme die Fahrhinweise gegeben werden. Dann wird zu Verfahrensschritt 20 gesprungen.

In Verfahrensschritt 20 wird überprüft, ob sich das erfindungsgemäße Navigationsgerät einem POI nähert. Der aktuelle Standort des Navigationsgeräts wird mittels der Ortungsvorrichtung 8 festgestellt, wobei hier insbesondere die Points of Announcements (POA) verwendet werden können. Der Standort wird mit dem Ort, dem POA, des nächst liegenden POI verglichen, um einen Abstand zu ermitteln. Liegt der Abstand unter einem vorgegebenen Schwellwert, zum Beispiel zwei Kilometer, dann beginnt das erfindungsgemäße Navigationsgerät mittels des Lautsprechers 5 und/oder der Anzeige 7 mit der Ausgabe von Informationen über den nächst liegenden POI. Die Informationen werden aus dem Speicher 3 abgerufen. Die POA beziehungsweise die Entfernung zum POI, ab der Informationen automatisch ausgegeben werden, kann in einer Weiterbildung um die Berücksichtigung der Geschwindigkeit ergänzt werden, so dass bei einer hohen Geschwindigkeit der POA weiter von dem POI entfernt liegt als bei einer niedrigeren Geschwindigkeit. Das gleiche gilt, wenn die Informationen entfernungsabhängig ausgegeben werden. Nach Verfahrensschritt 20 wird zu Verfahrensschritt 18 zurückgesprungen.

## Patentansprüche

1. Navigationsgerät, wobei das Navigationsgerät einen Prozessor (2) aufweist, wobei der Prozessor (2) mit einem Speicher (3), mit einem Lautsprecher (5), mit einer Eingabevorrichtung (14), mit einer Anzeige (7), mit einer Ortungsvorrichtung (8) und mit Kommunikationsmitteln (9, 10, 11, 12) verbunden ist, wobei der Prozessor (2) derart ausgebildet ist, dass der Prozessor (2) nach einer Zieleingabe mittels der Eingabevorrichtung eine Route zu dem Ziel berechnet und die Route auf der Anzeige anzeigt und/oder Fahrhinweise bzgl. der Route mittels des Lautsprechers ausgibt, **dadurch gekennzeichnet, dass** der Prozessor Mittel aufweist, womit der Prozessor (2) wenigstens eine Tour zur Anfahrt von Zielen berechnet, wobei der Prozessor (2) Eingaben bzgl. der Tourenlänge, der Reisedauer, der jeweiligen Verweildauer an den Zielen, der Zahl und/oder Art der Ziele bei der Berechnung der Tour berücksichtigt.

2. Navigationsgerät nach Anspruch 1, **dadurch gekennzeichnet, dass** der Prozessor (2) so ausgebildet ist, **dass** der Prozessor (2) als Tour einen Rundkurs berechnet.

3. Navigationsgerät nach Anspruch 1 oder 2, **dadurch gekennzeichnet, dass** der Prozessor (2) so ausgebildet ist, **dass** der Prozessor (2) mittels der Ortungsvorrichtung (8) eine Annäherung an ein Ziel detektiert und bei Erreichen einer vorgegebenen Entfernung von dem Ziel oder eines bestimmten Ortes in der Nähe des Ziels Hinweise über das Ziel aus dem Speicher (3) lädt und die Hinweise mittels des Lautsprechers (5) und/oder der Anzeige (7) darstellt.

4. Navigationsgerät nach Anspruch 1, 2 oder 3, **dadurch gekennzeichnet, dass** der Prozessor (2) so ausgebildet ist, **dass** der Prozessor (2) während einer Fahrt in Abhängigkeit von Eingaben mittels der Eingabevorrichtung (14) die berechnete Tour anpaßt.

5. Navigationsgerät nach einem der vorhergehenden Ansprüche, **dadurch gekennzeichnet, dass** der Prozessor (2) so ausgebildet ist, **dass** der Prozessor (2) in Abhängigkeit von Eingaben während einer Fahrt Zusatzinformationen aus dem Speicher (3) lädt und die Zusatzinformationen mittels der Anzeige (7) und/oder dem Lautsprecher (5) ausgibt.

6. Navigationsgerät nach einem der vorhergehenden Ansprüche, **dadurch gekennzeichnet, dass** der Prozessor (2) so ausgebildet ist, **dass** der Prozessor (2) berechnete Touren aus dem Speicher (3) lädt oder mittels der Kommunikationsmittel (9 bis 12) abruft.

7. Navigationsgerät nach einem der vorhergehenden Ansprüche, **dadurch gekennzeichnet, dass** der Prozessor (2) so ausgebildet ist, **dass** der Prozessor (2) die Zusatzinformationen mittels der Kommunikationsmittel (9 bis 12) abruft.

8. Verfahren zur Tourenberechnung zur Anfahrt von Zielen, wobei von einem Prozessor (2) in Abhängigkeit von Zieleingaben eine Route berechnet wird, wobei die berechnete Route angezeigt und/oder akustische Fahrhinweise gegeben werden, **dadurch gekennzeichnet, dass** von dem Prozessor (2) eine Tour zur Anfahrt der Ziele in Abhängigkeit von Eingaben bzgl. der Tourenlänge, der Reisedauer, der Verweildauer an den Zielen, der Zahl und/oder der Art der Ziele berechnet wird.

9. Verfahren nach Anspruch 8, **dadurch gekennzeichnet, dass** die Tour zur Anfahrt der Ziele als Rundkurs berechnet wird.

10. Verfahren nach Anspruch 8 oder 9, **dadurch gekennzeichnet, dass** eine Annäherung an ein Ziel detektiert wird, das nach Erreichen einer vorgegebenen Entfernung von dem Ziel Hinweise über das Ziel geladen werden und dann akustisch und/oder optisch wiedergegeben werden.

11. Verfahren nach einem der Ansprüche 8 bis 10, **dadurch gekennzeichnet, dass** die berechnete Tour in Abhängigkeit von Eingaben während einer Fahrt angepaßt wird.

12. Verfahren nach einem der Ansprüche 8 bis 11, **dadurch gekennzeichnet, dass** in Abhängigkeit von Eingaben während einer Fahrt Zusatzinformationen geladen werden und **dass** die Zusatzinformation akustisch und/oder optisch wiedergegeben werden.

13. Verfahren nach einem der Ansprüche 8 bis 12, **dadurch gekennzeichnet, dass** die Zusatzinformation mittels Kommunikationsmitteln (9 bis 12) abgerufen werden.

14. Verfahren nach einem der Ansprüche 8 bis 13, **dadurch gekennzeichnet, dass** berechnete Touren aus einem Speicher (2) oder mittels der Kommunikationsmittel geladen werden.

15. Verfahren nach einem der Ansprüche 8 bis 14, **dadurch gekennzeichnet, dass** für Fahrhinweise eine erste künstliche Stimme und für die Hinweise über die Ziele sowie für die Zusatzinformation eine zweite künstliche Stimme für die akustische Wiedergabe verwendet werden.
